Europäisches Patentamt

European Patent Office

Office européen des brevets

(11) Veröffentlichungsnummer: **0 170 155**

**A1**

(12) # EUROPÄISCHE PATENTANMELDUNG

(21) Anmeldenummer: 85108882.3

(22) Anmeldetag: 16.07.85

(51) Int. Cl.⁴: **B 60 H 1/00**
B 60 K 37/06

(30) Priorität: 01.08.84 DE 3428376
16.11.84 DE 3441940

(43) Veröffentlichungstag der Anmeldung:
05.02.86 Patentblatt 86/6

(84) Benannte Vertragsstaaten:
AT BE CH FR GB IT LI LU NL SE

(71) Anmelder: PREH, Elektrofeinmechanische Werke Jakob
Preh Nachf. GmbH & Co.
Postfach 1740 Schweinfurter Strasse 5
D-8740 Bad Neustadt/Saale(DE)

(72) Erfinder: Bauer, Karl-Heinz
Lerchenstrasse 9
D-8740 Bad Neustadt/Saale(DE)

(72) Erfinder: Wolf, Reinhold
Hangweg 17
D-8740 Bad Neustadt/S(DE)

(72) Erfinder: Voll, Walter
Lindenstrasse 68a
D-8741 Langenleiten(DE)

(54) **Bedieneinheit.**

(57) Eine Bedieneinheit zum Einstellen von Heizungs-, Klima- und/oder Lüftungsanlagen in Kraftfahrzeugen soll so aufgebaut sein, daß bei einem bestimmten Drehbereich eines Drehknopfes 3 mehr als ein Bowdenzug 12, 13 betätigt werden kann, wobei die Bowdenzüge nach Geschwindigkeit und Strecke unterschiedliche Verstellwege haben. Es sind mit dem Drehknopf 3 zwei Zahnräder 5 und 17 verbunden. Jedem Zahnrad 5, 17 ist eine Zahnstange 7, 8 zugeordnet. Die Zahnräder 5, 17 weisen eine unterschiedliche Verzahnung auf. Die erste und die zweite Zahnstange 7, 8 sind durch abhängig von der Drehstellung und der Drehrichtung des Drehknopfes 3, zeitlich beschränkte, lösbare Mitnahmemittel 29, 37 miteinander verbunden.

Fig. 1

EP 0 170 155 A1

P r e h
Elektrofeinmechanische Werke
Jakob Preh, Nachf. GmbH & Co.
Schweinfurter Straße 5
8740 Bad Neustadt/Saale

22/84 Pt.+Hgm

B e d i e n e i n h e i t

Die Erfindung geht von einer Bedieneinheit zum Einstellen von Heizungs-, Klima- und/oder Lüftungsanlagen in Kraftfahrzeugen nach dem Oberbegriff des Anspruchs 1 aus.

Derartige in ein Armaturenbrett eines Kraftfahrzeuges einsetzbare Bedieneinheiten werden unter anderem z.B. zum unterschiedlich weiten Öffnen von Verteiler-Klappen von Auslässen für kühle oder warme Luft in vielfach als Klimaanlage bezeichneten Einrichtungen der Kraftfahrzeuge verwendet. Die Betätigung erfolgt hierbei über sogenannte Bowdenzüge.

Aus der US-PS 3 490 518 ist bereits eine Bedieneinheit zum Einstellen der Klimaanlage in einem Kraftfahrzeug bekannt, bei der gleichzeitig zwei Bowdenzüge bewegt werden. Es ist ein Grundkörper vorhanden, der in das Armaturenbrett eingesetzt ist. Dieser Grundkörper besteht aus einer Frontplatte und einem senkrecht dazu stehenden Trägerelement. In der Frontplatte ist ein Schlitz ausgespart, durch den ein Hebel zum Betätigen herausragt. Dieser Hebel ist mit einem Drehelement verbunden, an dessen rückwärtigen Ende die beiden Bowdenzüge befestigt sind. Im Trägerelement, das die Form einer Platte aufweist, sind ein gerader Schlitz und zwei bogenförmige Schlitze ausgespart. In dem geraden Schlitz ist ein Zapfen geführt, der mit dem Drehelement verbunden ist. In die bogenförmigen Schlitze ragen ebenfalls Zapfen des Drehelementes, die sich an den Befestigungsstellen der Bowdenzüge befinden. Wird der Hebel geschwenkt, so dreht sich das Drehelement, wobei es sich gleichzeitig in der Ebene des Trägerelementes verschiebt, wobei es durch die Zapfen zwangsgeführt ist. Bei dieser Bedieneinheit können die beiden Bowdenzüge immer nur gleichzeitig nicht jedoch unabhängig voneinander bewegt werden.

Eine ähnliche Bedieneinheit ist aus der US-PS 2 865 220 bekannt. Auch hier können zwei Bowdenzüge gleichzeitig, jedoch nicht unabhängig voneinander bewegt werden. Es ist ein zweiarmiger Einstellhebel vorhanden, der in einem Drehlager drehbar gelagert ist. An dem einen Arm befindet sich der Betätigungsknopf, während am anderen Arm ein Langloch vorhanden ist. In diesem Langloch ist ein Zapfen geführt, der zu einem sichelförmigen Zwischenhebel gehört. An den freien Enden des Zwischenhebels sind die beiden Bowdenzüge befestigt. Diese Enden sind gleichzeitig in bogenförmigen Schlitzen des Trägerelementes geführt. Schwenkt man nun den Einstellhebel, so gleitet der Zwischenhebel in der Ebene des Trägerelementes in eine Kurve, die durch die Zwangsführung in den bogenförmigen Schlitzen festgelegt ist.

Eine weitere Bedieneinheit zur Betätigung zweier Bowdenzüge ist in der US-PS 3 355 960 beschrieben. Auch hier ist ein Grundkörper vorhanden, in dessen Schlitz in der Frontplatte ein Hebel geführt ist. Mit dem Hebel verbunden ist ein V-förmiger Zwischenhebel, an dessen freien Ende die beiden Bowdenzüge befestigt sind. An diesen Enden ist der Zwischenhebel mittels Mitnehmer in bogenförmigen Schlitzen im Trägerelement geführt.

Mit einem Hebel, der dreieckförmig gestaltet ist, ist eine in der FR-PS 2 352 336 beschriebene Bedieneinheit ausgestattet. Es ist ein Grundkörper vorgesehen, durch dessen Schlitz in der Frontplatte der Betätigungsknopf ragt. Dieser Knopf befindet sich in einer Ecke des dreieckförmigen Hebels, während in den beiden anderen Ecken des Hebels dieser mit je einem Zwischenhebel gelenkig verbunden ist. Jeder Zwischenhebel ist an dem gegenüberliegenden Ende in einem Drehlager drehbar gelagert. Außerdem weist jeder Zwischenhebel einen sichelförmigen Schlitz auf, in den ein Zapfen eines Schwingarmes geführt ist. Dieser Schwingarm ist ebenfalls an einem Ende in einem Drehlager drehbar gelagert. Am anderen Ende des Schwingarmes ist ein Bowdenzug befestigt. Wird der Hebel im Schlitz verschoben, so werden die beiden Bowdenzüge gleichzeitig bewegt.

Aus dem DE-GM 78 17 538 ist eine andere Bedieneinheit bekannt, bei der durch einen Hebel über ein kompliziertes Gestänge ebenfalls zwei Bowdenzüge gleichzeitig bewegt werden können. Die bislang beschriebenen Bedieneinheiten verwenden alle einen Hebel zum gleichzeitigen Betätigen zweier Bowdenzüge.

Einen Drehknopf verwendet hingegen eine weitere bekannte Bedieneinheit, die aus einem Grundkörper besteht, in dessen Frontplatte ein Drehknopf drehbar gelagert ist. Mit dem Drehknopf verbunden ist ein erstes Kegelrad. Hinter der Frontplatte befindet sich ein rückwärtiges Trägerelement in Form eines Rahmens. In diesem Rahmen ist ein zweiarmiger, einstückiger, flacher und plattenförmiger Hebel drehbar, dessen einer Arm endeitig in einem Kreissegment einen Zahnkranz als eine Art zweites Kegelrad aufweist, dessen Zähne in die Zähne des ersten Kegelrades eingreifen. Am Ende des anderen Armes ist ein Bowdenzug eingehängt. Da der Hebel einstückig ausgeführt ist, ist nur eine lineare Bewegung des Bowdenzuges möglich.

Aufgabe der vorliegenden Erfindung ist es, eine Bedieneinheit nach der eingangs genannten Art mit konstruktiv einfachen Mitteln derart zu gestalten. daß mit einem auf einen bestimmten Drehbereich

- 5 -

begrenzten Drehknopf mehr als ein Bowdenzug betätigt werden kann, wobei die Bowdenzüge zumindest teilweise voneinander unabhängige, verschiedene lineare Verstellwege besitzen.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Die Erfindung wird nachfolgend für zwei Ausführungsbeispiele anhand der Zeichnungen näher beschrieben.

Von den Figuren zeigt

Figur 1 eine Frontansicht der Bedieneinheit,

Figur 2 eine perspektivische Rückansicht der Bedieneinheit und

Figur 3 eine perspektivische Ansicht eines weiteren Ausführungsbeispiels einer Bedieneinheit.

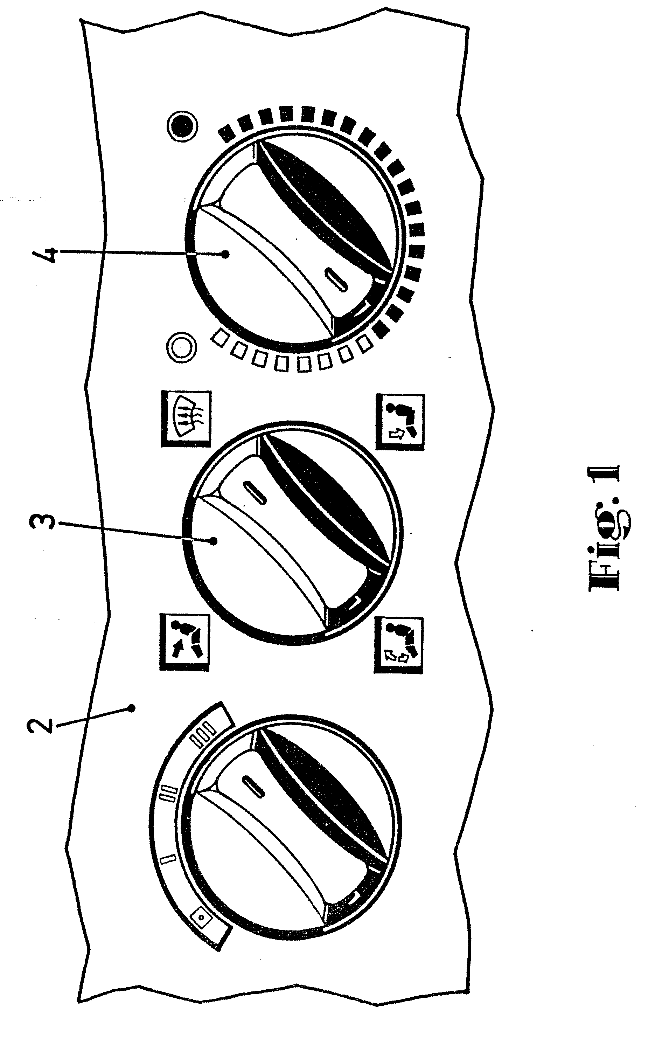

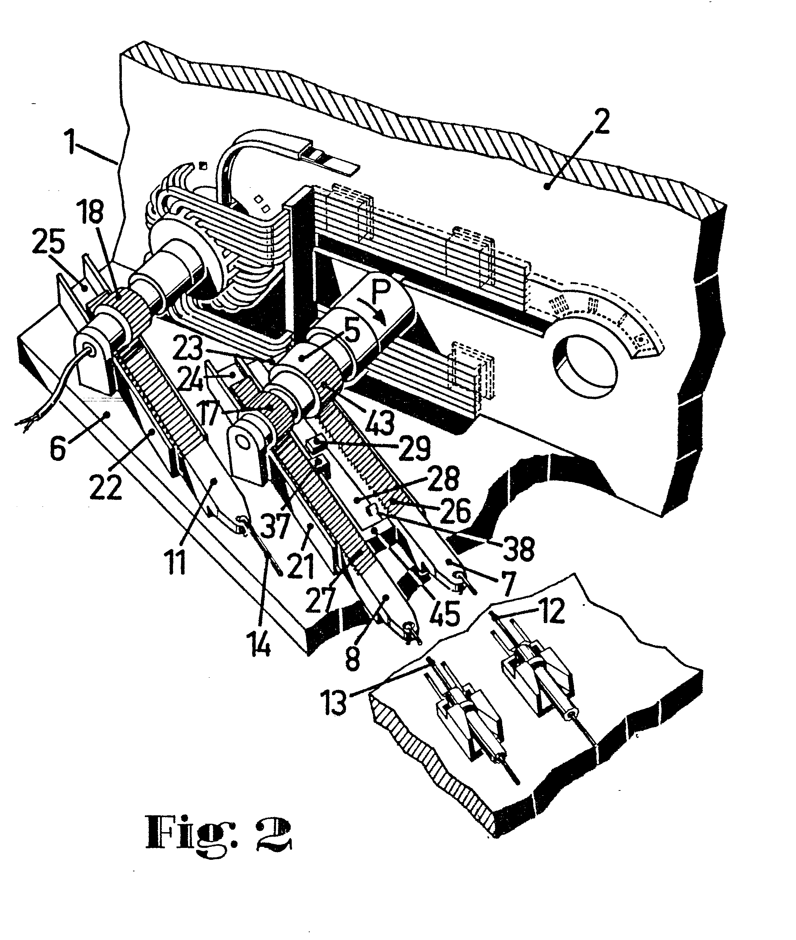

Die Bedieneinheit weist beim Ausführungsbeispiel nach Figur 1 und 2 einen Grundkörper 1 auf, der in ein Armaturenbrett eines Kraftfahrzeugs einsetzbar ist und an dem eine Frontplatte 2 vorgesehen ist.
An der Frontplatte 2 sind zwei Drehknöpfe 3 und 4
drehbar gelagert. Der Drehknopf 3 ist zur Luftleitung im Kraftfahrzeug vorgesehen. Der Drehknopf 4
dient der Warm/Kalteinstellung. Mittels eines nicht
näher bezeichneten Drehschalters läßt sich ein
Gebläse schalten.

An dem Drehknopf 3 sitzen ein Zahnrad 5 und ein
Zahnrad 17. Der Drehknopf 3 und damit auch die
Zahnräder 5 und 17 sind um etwa 270° drehbar. Der
Durchmesser des Zahnrades 5 ist größer als der Durchmesser des Zahnrades 17. Die Zahnräder weisen eine
runde Wälzlinie auf.

Das Zahnrad 5 ist nur an einem Teil seines Umfangs
mit Zähnen versehen. Diese bilden einen Zahnkranz 43
in Form eines Kreissegments. Der Winkel des Kreissegments ist kleiner als der Winkel des Drehbereichs des Drehknopfes 3. Im Beispielsfalle liegt
der Winkel des Kreissegments etwa bei 180°. Die
Zahnspitzen des Zahnkranzes 43 liegen auf der gleichen Umfangslinie, wie der nicht mit Zähnen versehene Teil des Zahnrades 5.

An ein plattenförmiges Trägerelement 6 ist ein
Ansatz 21 angeformt, der Nuten 23 und 24 aufweist.
In die Nuten 23 und 24 sind von geraden Zahnstangen
7 und 8 gebildete Verstellelemente geführt. Die
Zahnstange 7 ist vom Zahnrad 5 antreibbar. Die Zahnstange 8 ist vom Zahnrad 17 antreibbar. An der
Zahnstange 7 greift ein Bowdenzug 12 an. An der
Zahnstange 8 greift ein Bowdenzug 13 an.

Die Nuten 23 und 24 verlaufen in einem spitzen Winkel zur Frontplatte 2. Dementsprechend sind die
Zähne der Zahnstangen 7 und 8 als Schrägzähne 26
und 27 ausgebildet. Die Nuten 23 und 24 verlaufen in
Anpassung an die verschiedenen Radien der Zahnräder 5 und 17 im Ansatz 21 in unterschiedlichen
Höhen.

Zwischen den Zahnstangen 7 und 8 sind Mitnahmemittel vorgesehen. Diese sind von einem an der
Zahnstange 7 angeformten Mitnehmer 29 und von einem
an die Zahnstange 8 angeformten Mitnehmer 37 gebildet.
Die Mitnehmer 29 und 37 ragen in eine zwischen den
Nuten 23 und 24 angeordnete Vertiefung 28. Sie sind
so gestaltet, daß sie aneinander anschlagen, wenn sie
sich nahekommen. An der Zahnstange 7 ist außerdem
ein Zapfen 38 ausgebildet, der ebenfalls in die
Vertiefung 28 ragt und der an eine Begrenzung 45
der Vertiefung 28 am Bewegungsende der Zahnstange 7
anschlägt.

Die Funktionsweise der beschriebenen Einrichtung ist
etwa folgende:

Werden ausgehend von der in der Figur 2 dargestellten Mittelstellung der Drehknopf 3 und damit die

- 8 -

Zahnräder 5 und 17 in Richtung des Pfeiles P gedreht, dann wandern beide Zahnstangen 7 und 8 parallel nach links. Aufgrund des größeren Durchmessers des Zahnrades 5 wandert die Zahnstange 7 schneller als die Zahnstange 8. Dementsprechend entfernt sich der Mitnehmer 29 vom Mitnehmer 37. Es wird dann eine linke Endstellung erreicht.

Wird ausgehend von der linken Endstellung der Drehknopf 3 und damit die Zahnräder 5 und 17 entgegen der Richtung des Pfeiles P gedreht, dann wandern beide Zahnstangen 7 und 8 parallel nach rechts. Die Zahnstange 7 bewegt sich schneller als die Zahnstange 8. Es wird dann eine Mittelstellung erreicht, in der der Mitnehmer 29 auf den Mitnehmer 37 trifft. In dieser Stellung steht der letzte linke Zahn der Zahnstange 7 unter dem Ende des Zahnkranzes 43.

Der Zapfen 38 stößt an der Vertiefungsbegrenzung 45 an. Wird nun der Drehknopf 3 und damit die Zahnräder 5 und 17 in Gegenrichtung des Pfeiles P weitergedreht, dann bleibt die Zahnstange 7 stehen, da sie nicht mehr in Eingriff mit den Zähnen des Zahnkranzes 43 steht. Nur die Zahnstange 8 wandert bis zum Anschlag weiter. Währenddessen kann die Zahnstange 7 wegen des Anschlagens des Zapfens 38 sich nicht nach rechts bewegen. Sie kann durch den Bowdenzug 12 aber auch nicht nach links gedrückt werden, da ihr letzter linker Zahn an dem nicht mit Zähnen versehenen Umfangsteil des Zahnrades 5 anstößt.

- 9 -

Werden aus der rechten Endstellung der Drehknopf 3 und damit die Zahnräder 5 und 17 in Richtung des Pfeiles P gedreht, dann wandert zunächst nur die Zahnstange 8 nach links. Am letzten linken Zahn der Zahnstange 7 wandert der nicht mit Zähnen versehene Umfangsteil des Zahnrades 5 vorbei. Im Laufe der Linksbewegung der Zahnstange 8 trifft deren Mitnehmer 37 auf den Mitnehmer 29 der Zahnstange 7. Er schiebt dann die Zahnstange 7 so nach links, daß sie in den Zahnkranz 43 eingreift, der sich jetzt so weit gedreht hat, daß dem letzten linken Zahn der Zahnstange 7 der erste oder einer der ersten Zähne des Zahnkranzes 43 gegenüberstehen. Bei einer weiteren Drehung in Richtung des Pfeiles P bewegen sich wie beschrieben beide Zahnstangen 7, 8 nach links.

Es ist also erreicht, daß trotz einheitlicher Drehung des Drehknopfes 3 die beiden Zahnstangen 7 und 8 ganz unterschiedliche Bewegungen ausführen. Die Bewegungen unterscheiden sich in Geschwindigkeit und Gesamtbewegungsstrecke. Außerdem ist erreicht, daß die Zahnstange 7, die während eines Teils der Bewegungsstrecke der Zahnstange 8 nicht mitbewegt wird, währenddessen blockiert ist, so daß sie sich nicht unerwünscht verstellen kann. Die unterschiedlichen Bewegungen der Zahnstangen 7 und 8 sind an die Bewegungen der Klappen oder Schieber angepaßt, die von den Bowdenzügen 12 und 13 betätigt werden.

Mittels des Drehknopfes 4 wird ein Zahnrad 18 gedreht, das in eine Zahnstange 11 eingreift. An dieser greift ein Bowdenzug 14 an. Die Zahnstange 11 ist in einer Nut 25 eines Ansatzes 22 geführt.

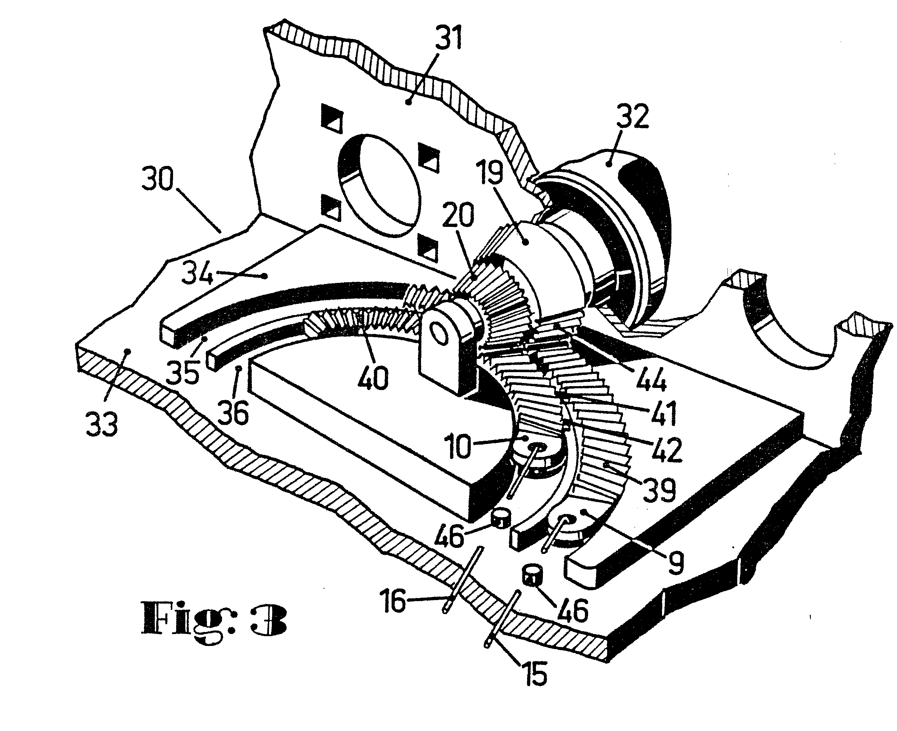

Beim Ausführungsbeispiel nach Figur 3 weist der Grundkörper 30 eine Frontplatte 31 und ein Trägerelement 33 auf, an dem ein Ansatz 34 mit Nuten 35 und 36 ausgebildet ist. Die Nuten 35 und 36 verlaufen kreisbogenförmig. In ihnen sind entsprechend gekrümmte Zahnstangen 9 bzw. 10 als Verstellelemente gelagert. In die Zahnstangen 9 und 10 greifen Kegelräder 19 bzw. 20 ein. Entsprechend der Neigung der Zähne der Kegelräder 19 und 20 sind die radial zu den kreisbogenförmigen Nuten 35 und 36 verlaufenden Geradzähne 39 und 40 der Zahnstangen 9 und 10 in radialer Richtung nach außen geneigt. Am Kegelrad 19 ist die Verzahnung als segmentförmiger Zahnkranz 44 ausgebildet, wie dies beim Zahnrad 5 beschrieben ist.

Als Mitnahmemittel sind an die Zahnstangen 9 und 10 seitlich abragende, aufeinander zugerichtete, sich überlappende Nasen 41 und 42 angeformt. Deren Funktion entspricht der Funktion der beschriebenen Mitnehmer 29 und 37. In den Nuten 35 und 36 sind als Anschläge Erhöhungen 46 vorgesehen.

An den Zahnstangen 9 und 10 greifen Bowdenzüge 15 und 16 an. Ein dem Drehknopf 3 entsprechender Drehknopf 32 dient dem Antrieb der Kegelräder 19 und 20.

Die Funktionsweise des Ausführungsbeispiels nach
Figur 3 entspricht im wesentlichen der zum Ausführungsbeispiel nach Figur 2 beschriebenen Wirkungsweise mit dem Unterschied, daß die Zahnstangen 9 und
10 beim Ausführungsbeispiel nach Figur 3 sich auf
Kreisen bewegen. Auch hier bewegen sich die Zahnstangen 8 und 9 beim Drehen des Drehknopfes 32 mit
unterschiedlichen Geschwindigkeiten und über unterschiedliche Strecken.

Bezugszeichenliste 22/84

1 Grundkörper
2 Frontplatte
3 Drehknopf
4 Drehknopf
5 Zahnrad
6 Trägerelement
7 Zahnstange (gerade)
8 Zahnstange (gerade)
9 Zahnstange (gekrümmt)
10 Zahnstange (gekrümmt)
11 Zahnstange (gerade)
12 Bowdenzug
13 Bowdenzug
14 Bowdenzug
15 Bowdenzug
16 Bowdenzug
17 Zahnrad
18 Zahnrad
19 Kegelrad
20 Kegelrad
21 Ansatz
22 Ansatz
23 Nut
24 Nut
25 Nut
26 Schrägzähne
27 Schrägzähne

28 Vertiefung
29 Mitnehmer
30 Grundkörper
31 Frontplatte
32 Drehknopf
33 Trägerelement
34 Ansatz
35 Nut
36 Nut
37 Mitnehmer
38 Zapfen
39 Geradzähne
40 Geradzähne
41 Nase
42 Nase
43 Zahnkranz (segmentförmig)
44 Zahnkranz (segmentförmig)
45 Vertiefungsbegrenzung
46 Erhöhung

P r e h
Elektrofeinmechanische Werke
Jakob Preh, Nachf. GmbH & Co.
Schweinfurter Straße 5
8740 Bad Neustadt/Saale


22/84 Pt.


B e d i e n e i n h e i t


A n s p r ü c h e


1. Bedieneinheit zum Einstellen von Heizungs-,
Klima- und/oder Lüftungsanlagen in Kraftfahrzeugen
mit einem in ein Armaturenbrett einsetzbaren Grundkörper (1, 30), bestehend aus einer vorderen Frontplatte (2, 31), in der mindestens ein Drehknopf
(3, 4, 32) drehbar gelagert ist, mit dessen Hilfe
ein erstes treibendes Zahnrad (5, 19) drehbar ist,
und aus einem rückwärtigen Trägerelement (6, 33),
in dem ein mit Zähnen (26, 39) versehenes, durch das
erste Zahnrad (5, 19) angetriebenes, erstes Verstellelement (7, 9) zur Betätigung von Bowdenzügen (12,
15) verschiebbar gelagert ist,
dadurch gekennzeichnet,
daß ein zweites treibendes Zahnrad (17, 20) mit dem
Drehknopf (3, 32) verbunden ist und daß ein zweites
mit Zähnen (27, 40) versehenes, durch das zweite
Zahnrad (17, 20) angetriebenes, zweites Verstellelement (8, 10) vorhanden ist, wobei das erste und das zweite Verstellelement (7 bzw. 8, 9 bzw. 10) durch, abhängig von der Drehstellung und der Drehrichtung des Drehknopfes (3, 32), zeitlich beschränkte, lösbare Mitnahmemittel miteinander verbunden sind.

2. Bedieneinheit nach Anspruch 1, dadurch gekennzeichnet, daß die Verstellelemente (7, 8, 9, 10) parallel mit unterschiedlichen Geschwindigkeiten verschiebbar sind.

3. Bedieneinheit nach Anspruch 1, dadurch gekennzeichnet, daß eines der treibenden Zahnräder (5, 19) nur in einem Kreissegment mit einem Zahnkranz (43, 44) versehen ist.

4. Bedieneinheit nach Anspruch 3, dadurch gekennzeichnet, daß der Winkel des Kreissegmentes kleiner ist als der Winkel des Drehbereiches des Drehknopfes (3, 32).

5. Bedieneinheit nach einem der Ansprüche 1 bis 4, dadurch gekennzeichnet, daß der Radius des ersten treibenden Zahnrades (5, 19) und der des zweiten treibenden Zahnrades (17, 20) voneinander abweichen.

6. Bedieneinheit nach einem der Ansprüche 1 bis 5,

dadurch gekennzeichnet,
daß das erste treibende Zahnrad (5, 19) und das
zweite treibende Zahnrad (17, 20) eine runde Wälzlinie aufweisen.

7.     Bedieneinheit nach einem der Ansprüche 1 bis 6,
dadurch gekennzeichnet,
daß die Verstellelemente (7, 8, 9, 10) in Nuten
(23, 24, 35, 36) eines an das plattenförmige Trägerelement (6, 33) angeformten Ansatzes (21, 34) geführt
sind.

8.     Bedieneinheit nach einem der Ansprüche 1 bis 7,
dadurch gekennzeichnet,
daß das Verstellelement eine gerade Zahnstange (7, 8)
ist.

9.     Bedieneinheit nach einem der Ansprüche 1 bis 7,
dadurch gekennzeichnet,
daß das Verstellelement eine gekrümmte Zahnstange (9, 10) ist.

10.     Bedieneinheit nach Anspruch 8,
dadurch gekennzeichnet,
daß die Zahnstange (7, 8) Schrägzähne (26, 27)
besitzt.

11.     Bedieneinheit nach Anspruch 8,
dadurch gekennzeichnet,

- 4 -

daß die Nuten (23, 24) in einem spitzen Winkel zu
der Frontplatte (2) verlaufen.

12. Bedieneinheit nach Anspruch 9,
dadurch gekennzeichnet,
daß die Nuten (35, 36) bogenförmig verlaufen.

13. Bedieneinheit nach einem der Ansprüche 1 bis 8,
10, 11,
dadurch gekennzeichnet,
daß die Nuten (23, 24, 35, 36) in Anpassung an die
verschiedenen Radien der treibenden Zahnräder (5, 17,
19, 20) in unterschiedlichen Höhen im Ansatz (21, 34)
verlaufen.

14. Bedieneinheit nach einem der Ansprüche 1 bis 8,
10, 11, 13,
dadurch gekennzeichnet,
daß die Mitnahmemittel aus seitlich abragenden, aufeinander zu gerichteten, an die Zahnstangen (7, 8)
angeformten Mitnehmer (29, 37) bestehen, die in eine
zwischen den Nuten (23, 24) angeordnete Vertiefung
(28) ragen.

15. Bedieneinheit nach Anspruch 14,
dadurch gekennzeichnet,
daß die Mitnehmer (29, 37) Abschnitte aufweisen, die
so gestaltet sind, daß sie zur lösbaren Berührung
aneinander im Sinne einer Mitnahme gelangen können.

- 5 -

16. Bedieneinheit nach Anspruch 14 oder 15,

dadurch gekennzeichnet,

daß mindestens eine Zahnstange (7) einen angeformten, in die Vertiefung (28) ragenden Zapfen (38) aufweist, der mit der Vertiefungsbegrenzung (45) im Sinne eines Anschlages zusammenwirkt.

17. Bedieneinheit nach einem der Ansprüche 1 bis 7, 9, 12,

dadurch gekennzeichnet,

daß die beiden treibenden Zahnräder Kegelräder (19, 20) sind.

18. Bedieneinheit nach einem der Ansprüche 1 bis 7, 9, 12, 17,

dadurch gekennzeichnet,

daß die radial verlaufenden Geradzähne (39, 40) der gekrümmten Zahnstange (9, 10) in Anpassung an die Neigung der Zähne des zugehörigen Kegelrades (19, 20) in radialer Richtung nach außen oder nach innen geneigt sind.

19. Bedieneinheit nach einem der Ansprüche 1 bis 7, 9, 12, 17, 18,

dadurch gekennzeichnet,

daß die Mitnahmemittel aus seitlich abragenden, aufeinander zu gerichteten, an die gekrümmten Zahnstangen (9, 10) angeformten, sich überlappenden Nasen (41, 42) bestehen.

20. Bedieneinheit nach einem der Ansprüche 1 bis 17, 7, 9, 12, 17, 18, 19,
dadurch gekennzeichnet,
daß in den Nuten (35, 36) am Drehbereichsende des Drehknopfes (32) Erhöhungen (46) vorgesehen sind, die mit stirnseitigen Enden der gekrümmten Zahnstangen (9, 10) im Sinne eines Anschlages zusammenwirken.

21. Bedieneinheit nach einem der vorhergehenden Ansprüche,
dadurch gekennzeichnet,
daß die zweite Zahnstange (8, 10) die erste Zahnstange (7, 9) aus einer Stellung, in der die erste Zahnstange (7, 9) außer Eingriff mit dem segmentförmigen Zahnkranz (43, 44) steht, in eine Stellung mitnimmt, in der die erste Zahnstange (7, 9) im Eingriff mit dem segmentförmigen Zahnkranz (43, 44) steht.

22. Bedieneinheit nach einem der vorhergehenden Ansprüche,
dadurch gekennzeichnet,
daß die Spitzen der Zähne des segmentförmigen Zahnkranzes (43, 44) auf dem gleichen oder einem kleineren Radius liegen als der zahnlose Umfangsabschnitt.

23. Bedieneinheit nach einem der vorhergehenden Ansprüche,
dadurch gekennzeichnet,

daß die erste Zahnstange (7, 9) in ihrer einen Endstellung, in der sie außer Eingriff mit dem Zahnkranz (43, 44) steht, an der einen Seite durch den
Anschlag (38, 46) und an der anderen Seite durch
den zahnlosen Umfangsabschnitt des Zahnkranzes
(43, 44) blockiert ist.

**Fig. 1**

0170155

# Fig. 2

Fig: 3

0170155

Preh

0170155

Nummer der Anmeldung

EP 85 10 8882

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 450 898 (NISSAN)<br><br>* Spalte 4, Zeile 26 - Spalte 5, Zeile 9; Figur 3 *<br><br>--- | 1,3,4,<br>5,9,17 | B 60 H 1/00<br>B 60 K 37/06 |
| A | PATENTS ABSTRACTS OF JAPAN, Band 7, Nr. 59 (M-199)[1204], 11. März 1983; & JP - A - 57 205 218 (NIPPON RADIATOR K.K.) 16.12.1982<br>* Insgesamt *<br><br>--- | 1,7,8,<br>11 | |
| A | PATENTS ABSTRACTS OF JAPAN, Band 4, Nr. 169(M-43)[651], 21. November 1980; & JP - A - 55 119 514 (KOJIMA PRESS KOGYO K.K.) 13.09.1980<br>* Insgesamt *<br><br>--- | 1,17 | |
| | | | RECHERCHIERTE SACHGEBIETE (Int. Cl.4) |
| A | DE-U-7 508 128 (AUDI NSU)<br><br>* Seite 3, Zeilen 6-20; Figuren 1,4,5 *<br><br>--- | 1,2,5,<br>6,8 | B 60 H<br>B 60 K<br>G 05 G<br>F 16 H |
| A | FR-A- 659 256 (SCHIFANI)<br><br>* Insgesamt *<br><br>----- | 1,3,4,<br>6,8 | |

Der vorliegende Recherchenbericht wurde für alle Patentansprüche erstellt

| Recherchenort<br>DEN HAAG | Abschlußdatum der Recherche<br>04-10-1985 | Prüfer<br>MENDE H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82